# EUROPÄISCHE PATENTSCHRIFT

(11) **EP 0 814 324 B1**
(45) Veröffentlichungstag und Bekanntmachung des Hinweises auf die Patenterteilung: **18.08.1999**
(21) Anmeldenummer: 97810350.5
(22) Anmeldetag: 04.06.1997
(51) Int. Cl.: G01F 1/60

(54) **Messverstärker-Anordnungen von magnetisch-induktiven Durchflussmessern**
Instrumentation amplifier arrangements of electromagnetic flowmeters
Systèmes d'amplificateur de mesure pour débitmètres électromagnétiques

(30) Priorität: 20.06.1996 EP 96810413; 19.04.1997 EP 97106513
(43) Veröffentlichungstag der Anmeldung: 29.12.1997
(73) Patentinhaber: Endress + Hauser Flowtec AG, CH-4153 Reinach BL 1 (CH)
(72) Erfinder: Budmiger, Thomas, 4107 Ettingen (BL) (CH)
(74) Vertreter: Morstadt, Volker, Dipl.-Ing.

(56) Entgegenhaltungen:
- EP-A- 0 219 725
- EP-A- 0 521 169
- EP-A- 0 521 448
- EP-A- 0 548 439
- FR-A- 2 405 466
- SANDERSON M L: "PRINCIPLES AND PRACTICE OF ELECTROMAGNETIC FLOW MEASUREMENT" JOURNAL A, Bd. 32, Nr. 1, 1.März 1991, Seiten 19-26, XP000228471

## Beschreibung

Die Erfindung betrifft Meßverstärker-Anordnungen von magnetisch-induktiven Durchflußmessern.

Mit magnetisch-induktiven Durchflußmessern läßt sich bekanntlich der Volumendurchfluß eines elektrisch leitenden Fluids, das in einem Meßrohr fließt, messen. Der das Fluid berührende Teil des Meßrohrs ist elektrisch nicht-leitend, damit eine nach dem Faradayschen Induktionsgesetz von einem Magnetfeld induzierte elektrische Spannung nicht kurzgeschlossen würde, falls das Meßrohr vollständig aus einem Metall bestünde, also das Fluid das Metall berührte. Dabei durchsetzt das Magnetfeld das Meßrohr i.a. senkrecht zu dessen Längsachse.

Metall-Meßrohre, die selbstverständlich nicht ferromagnetisch sein dürfen, um das Magnetfeld nicht zu stören, sind daher üblicherweise innen mit einer elektrisch nicht-leitenden Schicht als Isolierung versehen; bei Kunststoff- oder Keramik-Meßrohren ist diese nicht-leitende Schicht nicht erforderlich.

Die erwähnte induzierte Spannung wird mittels galvanischen oder kapazitiven Meß-Elektroden abgegriffen. Dabei durchdringen galvanische Meß-Elektroden die Wand des Meßrohrs, so daß sie das Fluid berühren, während kapazitive Meß-Elektroden in die Wand des Meßrohrs so eingelasen sind, daß sie das Fluid nicht berühren, oder auf der Wand des Meßrohrs angeordnet sind.

In der US-A 54 02 685, die der EP-A 548 439 entspricht, ist eine Anordnung zum Betrieb mehrerer magnetisch-induktiver Durchflußaufnehmer an einer einzigen Auswerte-Elektronik beschrieben, welche Anordnung folgende, in Zusammenhang mit der Erfindung interessierende Teile umfaßt:
- ein erstes Meßrohr mit zwei galvanischen Meß-Elektroden und mit einer zugehörigen Spulenanordnung zur Erzeugung eines Magnetfelds,
- ein zweites Meßrohr mit zwei galvanischen Meß-Elektroden und mit einer zugehörigen Spulenanordnung zur Erzeugung eines Magnetfelds,
- ein drittes Meßrohr mit zwei galvanischen Meß-Elektroden und mit einer zugehörigen Spulenanordnung zur Erzeugung eines Magnetfelds, usw.
- ein vorletztes Meßrohr mit zwei galvanischen Meß-Elektroden und mit einer zugehörigen Spulenanordnung zur Erzeugung eines Magnetfelds und
- ein letztes Meßrohr mit zwei galvanischen Meß-Elektroden und mit einer zugehörigen Spulenanordnung zur Erzeugung eines Magnetfelds,
- eine einzige Verarbeitungseinheit für Potentiale der Meß-Elektroden,
- eine einzige Generator-Schaltung zur Erzeugung eines einzigen Spulenstrom für die Spulenanordnungen,
- eine Umschaltanordnung zur Durchverbindung der Spulenanordnung von jeweils einem der Meßrohre zur Generator-Schaltung und der Meß-Elektroden dieses Meßrohrs zur Verarbeitungseinheit.

Für die Verarbeitung der Signale der Meß-Elektroden enthält die US-A 54 02 685 lediglich den allgemeinen Hinweis auf die US-A 42 10 022, 44 22 337, 43 82 387 und 47 04 908. Diese beschreiben aber alle Meßschaltungen ohne Analog/ Digital-Wandler.

In der US-A 53 51 554 ist eine Meßverstärker-Anordnung eines magnetisch-induktiven Durchflußmessers beschrieben,
- der ein Meßrohr mit zwei galvanischen Meß-Elektroden und eine Spulenanordnung zur Erzeugung eines Magnetfelds aufweist,
- welche Meßverstärker-Anordnung umfaßt:
   -- eine einzige eingangsseitig mit jeder Meß-Elektrode verbundene Differenzstufe,
   -- einen der Differenzstufe nachgeschalteten Analog/ Digital-Wandler und
   -- einen den Analog/Digital-Wandler mit einem Abtastsignal speisenden Taktgenerator.

Ferner ist in der genannten US-A 53 51 554 erwähnt, daß bei der darin beschriebenen Schaltungsanordnung Kompensations-Anordnungen für elektrochemische Störspannungen angewendet werden können, wie sie in der US-A 42 10 022 und in der US-A 47 04 908 beschrieben sind.

Schließlich ist in der US-A 53 70 000, die der EP-A 521 448 entspricht, ein magnetisch-induktiver Durchflußmesser beschrieben, der folgende, in Zusammenhang mit der Erfindung interessierende Teile umfaßt:
- ein Meßrohr mit einer ersten und einer zweiten galvanischen Meß-Elektrode,
- eine Spulenanordnung zur Erzeugung eines Magnetfelds mittels eines Spulenstroms,
- eine Meßverstärker-Anordnung, die umfaßt:
   -- einen der ersten Meß-Elektrode nachgeschalteten ersten Impedanzwandler,
   -- einen der zweiten Meß-Elektrode nachgeschalteten zweiten Impedanzwandler,
   -- einen ersten Umschalter, von dem ein erster Eingang am Ausgang des ersten Impedanzwandlers und ein zweiter Eingang an einem Schaltungsnullpunkt liegt,
   -- einen zweiten Umschalter, von dem ein erster Eingang am Ausgang des zweiten Impedanzwandlers und ein zweiter Eingang am Schaltungsnullpunkt liegt,
   -- eine einem Ausgang des ersten Umschalters und einem Ausgang des zweiten Umschalters nachgeschaltete analoge Differenzstufe,
   -- einen weiteren Verstärker für eine an einem vom Spulenstrom durchflossenen Widerstand entstehende Spannung,
   -- einen Multiplexer, der einem Ausgang der Differenzstufe und einem Ausgang des weiteren Verstärkers nachgeschaltet ist, und
   -- einen dem Multiplexer nachgeschalteten Analog/Digital-Wandler.

Die vorbeschriebenen Meßverstärker-Anordnungen haben sich in der Praxis vielfach bewährt. Sie arbeiten z.B. mit einem Wert des Spulenstroms von 85 mA. Sollen mit ihnen jedoch Fluide mit hohen Feststoffanteilen, wie sie z.B. in der Bauindustrie (Steine in Flüssigbeton) oder in der Papierindustrie (Holzfasern in Papierbrei) vorkommen, gemessen werden, so führen die auf die Meß-Elektroden auftreffenden Feststoffe zu Störspannungen und somit zu einer Verschlechterung des Nutzsignal/Störsignal-Verhältnisses.

Bisher versuchte man, diese Verschlechterung dadurch zu beheben, daß man den Spulenstrom und somit die an den Meß-Elektroden abgegriffene induzierte Spannung erhöht hat. Dies bringt aber u.a. größer dimensionierte Netzteile, die wiederum größere Verluste aufweisen, und somit insgesamt einen größeren Energieverbrauch mit sich. Auch größer dimensionierte Elektronik-Gehäuse können benötigt werden.

Eine Aufgabe der Erfindung besteht daher darin, Meßverstärker-Anordnungen von magnetisch-induktiven Durchflußmessern anzugeben, mit denen eine zuverlässige Aufbereitung der Meß-Elektrodensignale auch bei feststoffbeladenen, insb. einen hohen Feststoffanteil enthaltenden, Fluiden möglich ist. Dabei soll insbesondere auf eine Erhöhung des Wertes des Spulenstroms verzichtet werden können, d.h. es sollen auch bei hohem Feststoffanteil die Spulen mit dem erwähnten Spulenstromwert von 85 mA gespeist werden können.

Zur Lösung dieser Aufgabe besteht eine erste Variante der Erfindung in einer Meßverstärker-Anordnung eines magnetisch-induktiven Durchflußmessers,
- der ein Meßrohr mit mindestens zwei Meß-Elektroden und einer Masse-Elektrode sowie eine Spulenanordnung zur Erzeugung eines Magnetfelds aufweist,
- welche Meßverstärker-Anordnung pro Meß-Elektrode umfaßt:
   -- einen eingangsseitig mit der Meß-Elektrode verbundenen Vorverstärker,
   -- einen dem Vorverstärker direkt nachgeschalteten Analog/ Digital-Wandler,
- welche Meßverstärker-Anordnung ferner umfaßt:
   -- einen die Analog/Digital-Wandler mit einem Abtastsignal speisenden Taktgenerator,
      --- dessen Frequenz größer als ca. 1 kHz ist, und
   -- einen den Analog/Digital-Wandlern nachgeschalteten Subtrahierer.

Zur Lösung der genannten Aufgabe besteht eine zweite Variante der Erfindung in einer Meßverstärker-Anordnung eines magnetisch-induktiven Durchflußmessers,
- der ein Meßrohr mit mindestens zwei Meß-Elektroden und einer Masse-Elektrode sowie eine Spulenanordnung zur Erzeugung eines Magnetfelds aufweist,
- welche Meßverstärker-Anordnung pro Meß-Elektrode einen eingangsseitig mit der Meß-Elektrode verbundenen Vorverstärker enthält und
- welche Meßverstärker-Anordnung ferner umfaßt:
   -- einen einem der Vorverstärker direkt nachgeschalteten ersten Analog/Digital-Wandler,
   -- eine den Vorverstärkern nachgeschaltete Differenzstufe,
   -- einen der Differenzstufe nachgeschalteten zweiten Analog/Digital-Wandler,
   -- einen den beiden Analog/Digital-Wandlern nachgeschalteten Subtrahierer und
   -- mindestens einen die Analog/Digital-Wandler mit einem Abtastsignal speisenden Taktgenerator,
      --- dessen Frequenz größer als ca. 1 kHz ist.

Nach einer Weiterbildung der ersten Variante der Erfindung sind eine Differenzstufe und ein weiterer, dieser nachgeschalteter, vom Taktgenerator gespeister Analog/ Digital-Wandler vorgesehen, wobei jeweils ein Eingang der Differenzstufe mit dem Ausgang des jeweiligen Vorverstärkers verbunden ist und der Ausgang des weiteren Analog/Digital-Wandlers an einem weiteren Subtrahend-Eingang des Subtrahieres liegt.

Nach einer anderen Weiterbildung der ersten Variante der Erfindung oder einer Weiterbildung der zweiten Variante sind die Analog/Digital-Wandler in einem Haupt-Analog/ Digital-Wandler vereinigt, und zwischen den Eingang des Haupt-Analog/Digital-Wandlers und die Ausgänge der Vorverstärker ist ein Multiplexer eingefügt.

Nach einer Vereinigung der erwähnten Weiterbildungen liegt an einem weiteren Eingang des Multiplexers der Ausgang der Differenzstufe.

Ein Vorteil der Erfindung besteht darin, daß am Ausgang der Analog/Digital-Wandler bzw. des Haupt-Analog/Digital-Wandlers Digitalsignale auftreten, bei denen es aufgrund der Frequenz des Abtastsignals von größer als ca. 1 kHz gegenüber der bisher hierfür üblichen Frequenz von bis zu ca. 100 Hz keine Schwierigkeiten macht, die Nutzanteile von den Störanteilen zu trennen und ein Volumendurchflußsignal mit hoher Genauigkeit, z.B. mit 0,5% vom Meßwert, zu erzeugen.

Die Erfindung und weitere Vorteile werden nun anhand von Ausführungsbeispielen, die in den Figuren der Zeichnung dargestellt sind, näher erläutert; gleiche Teile sind in den Figuren mit denselben Bezugszeichen versehen.
- Fig. 1: zeigt in Form eines Blockschaltbilds schematisch eine erste Variante einer Meßverstärker-Anordnung,
- Fig. 2: zeigt in Form eines Blockschaltbilds schematisch eine zweite Variante einer Meßverstärker-Anordnung,
- Fig. 3: zeigt in Form eines Blockschaltbilds schematisch eine Weiterbildung der Anordnung von Fig. 1, und
- Fig. 4: zeigt in Form eines Blockschaltbilds schematisch eine andere Weiterbildung der Anordnung von Fig. 1.

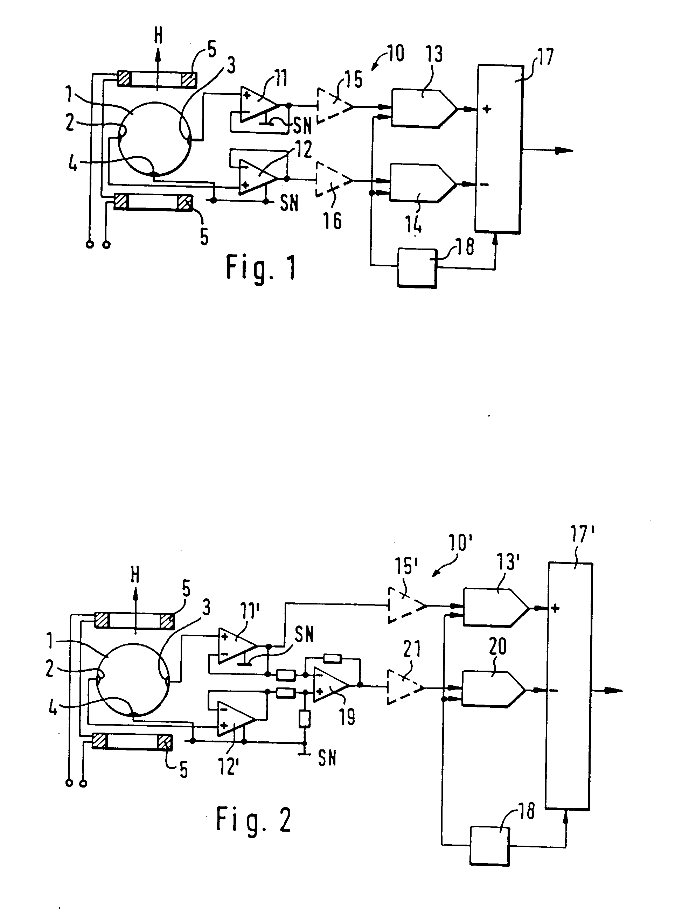

Im Blockschaltbild der Fig. 1 ist ein Meßrohr 1 schematisch im Querschnitt gezeigt. Von seiner Wand ist lediglich die Innenwand gezeichnet. Diagonal einander gegenüber liegend sind eine erste und eine zweite Meß-Elektrode 3, 2 in die Wand eingesetzt, ferner auch eine Masse-Elektrode 4 im unteren Teil des Meßrohrs 1. Die Elektroden 2, 3, 4 sind galvanische Elektroden und sind somit in der Wand so angebracht, daß sie im Betrieb das im Meßrohr 1 strömende Fluid berühren.

Die Masse-Elektrode 4 ist mit einem Schaltungsnullpunkt SN verbunden. Sie kann durch eine in vergleichbarer Weise wie die Meß-Elektroden 3, 2 ausgebildete und in der Wand des Meßrohrs 1 angeordnete konkrete Elektrode realisiert werden, aber auch in Form eines Erdungsrings, der zwischen einem Flansch des Meßrohrs und einem Gegenflansch der Rohrleitung eingespannt ist, in der das Fluid strömt.

In Fig. 1 ist ferner schematisch eine aus zwei Teilen bestehende Spulenanordnung 5 gezeigt, die im Betrieb ein das Meßrohr 1 durchsetzendes Magnetfeld der Stärke H erzeugt. Hierzu wird die Spulenanordnung 5 über die gezeichneten Klemmen mit einem entsprechenden Stromgenerator verbunden. Da dieser außerhalb des Rahmens der Erfindung liegt, können alle üblichen Stromgeneratoren verwendet werden, die z.B. einen bipolaren Gleichstrom oder einen Wechselstrom erzeugen. Auf die zeichnerische Darstellung des Stromgenerators wird daher verzichtet.

Eine Meßverstärker-Anordnung 10 umfaßt einen ersten Meßkanal für die erste Meß-Elektrode 3 mit einem eingangsseitig mit ihr verbundenen ersten Vorverstärker 11. Diesem ist ein erster Analog/Digital-Wandler 13 direkt nachgeschaltet. Es ist auch möglich, einen Verstärker 15, zwischenzuschalten, wie gestrichelt angedeutet ist.

In gleicher Weise umfaßt die Meßverstärker-Anordnung 10 einen zweiten Meßkanal für die zweite Meß-Elektrode 2 mit einem eingangsseitig mit ihr verbundenen zweiten Vorverstärker 12. Ihm ist ein zweiter Analog/Digital-Wandler 14 direkt nachgeschaltet. Es ist hier ebenfalls möglich, einen Verstärker 16 zwischenzuschalten, wie wieder gestrichelt angedeutet ist.

Zur Meßverstärker-Anordnung 10 gehören ferner noch ein Subtrahierer 17 und ein Taktgenerator 18. Der Subtrahierer 17 ist dem jeweiligen Ausgang der Analog/Digital-Wandler 13, 14 nachgeschaltet. Somit ist z.B. der Minuend-Eingang des Subtrahierers 17 mit dem Ausgang des Analog/Digital-Wandlers 13 und dessen Subtrahend-Eingang mit dem Ausgang des Analog/Digital-Wandlers 14 verbunden. Am Ausgang des Subtrahierers 17 entsteht ein zur Weiterverarbeitung besser geeignetes Signal, als dies bisher üblich ist.

Der Taktgenerator 18 speist die Analog/Digital-Wandler 13, 14 mit einem Abtastsignal, dessen Frequenz größer als ca. 1 kHz ist; bevorzugt liegt diese Frequenz in der Größenordnung von 10 kHz, also zwischen 5 kHz und 50 kHz. Ferner speist der Taktgenerator 18 den Subtrahierer 17 mit einem Taktsignal geeigneter Frequenz.

In Fig. 2 ist in gleicher Darstellungsweise wie in Fig. 1 eine zweite Variante der Erfindung gezeigt. Eine Meßverstärker-Anordnung 10' umfaßt einen ersten Meßkanal für die erste Meß-Elektrode 3 mit einem eingangsseitig mit ihr verbundenen ersten Vorverstärker 11'. Diesem ist ein erster Analog/Digital-Wandler 13' direkt nachgeschaltet. Es ist auch hier möglich, einen Verstärker 15' zwischenzuschalten, wie wieder gestrichelt angedeutet ist.

Ferner sind eine Differenzstufe 19 und ein dieser nachgeschalteter, vom Taktgenerator 18 ebenfalls getakteter zweiter Analog/Digital-Wandler 20 vorgesehen. Jeweils ein Eingang der Differenzstufe 19 ist mit dem Ausgang des jeweiligen Vorverstärkers 11' bzw. 12' verbunden.

Der Ausgang des zweiten Analog/Digital-Wandlers 20 liegt an einem Subtrahend-Eingang eines Subtrahieres 17'. Zwischen den Ausgang der Differenzstufe 19 und den Eingang des Analog/Digital-Wandlers 20 kann ein Verstärker 21 eingefügt sein, wie wieder gestrichelt angedeutet ist.

Die beiden Analog/Digital-Wandler 13', 20 können auch von zwei Taktgeneratoren getaktet werden, die voneinander unabhängig sind und auch Taktsignale unterschiedlicher Frequenz entsprechend den obigen Frequenzangaben erzeugen.

Da bei der zweiten Variante der Erfindung nach Fig. 2 an den Eingängen des Subtrahieres 17' ein dem Signal an der Meß-Elektrode 3 und ein der Differenz der Signale an den Meß-Elektroden 3, 2 jeweils proportionales Digitalsignal liegt, kann aus diesen beiden Digitalsignalen das Digitalsignal bezüglich der Meß-Elektrode 2 exakt berechnet werden.

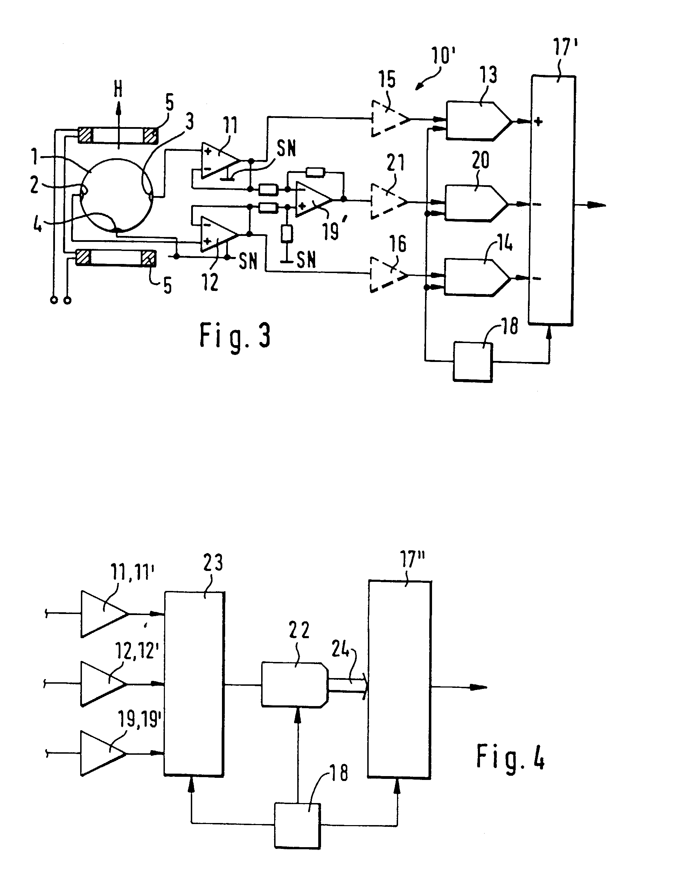

In Fig. 3 ist in gleicher Darstellungsweise wie in Fig. 1 eine Weiterbildung der ersten Variante der Erfindung, also der Meßverstärker-Anordnung von Fig. 1 gezeigt. Hier sind eine Differenzstufe 19' und ein weiterer, dieser nachgeschalteter, vom Taktgenerator 18 ebenfalls getakteter Analog/Digital-Wandler 20 vorgesehen. Jeweils ein Eingang der Differenzstufe 19' ist mit dem Ausgang des jeweiligen Vorverstärkers 11 bzw. 12 verbunden. Der Ausgang des weiteren Analog/Digital-Wandlers 20 liegt an einem weiteren Subtrahend-Eingang des Subtrahieres 17'.

Bei der Anordnung nach Fig. 3 kann ein weiterer Verstärker 21 zwischen dem Ausgang der Differenzstufe 19' und dem Eingang des Analog/Digital-Wandlers 20 eingefügt werden, wie dies wieder gestrichelt angedeutet ist.

Da bei der Weiterbildung nach Fig. 3 an den Eingängen des Subtrahieres 17' ein dem Signal an der Meß-Elektrode 2, ein dem Signal an der Meß-Elektrode 3 und ein der Differenz der Signale an den Meß-Elektroden 3, 2 jeweils proportionales Digitalsignal liegt und somit diese drei Digitalsignale eine Redundanz bezüglich der Signale an den Meß-Elektroden 3, 2 aufweisen, liegt es im Rahmen der Erfindung, in analoger Weise zu deren zweiter Variante nach Fig. 2 den oben erläuterten zweiten Meßkanal wegzulassen und das Digitalsignal bezüglich der Meß-Elektrode 3 aus der Differenz der Signale an den Meß-Elektroden 2, 3 rechnerisch zu bilden.

Nach einer in Fig. 4 nur noch ausschnittsweise gezeigten anderen Weiterbildung der Erfindung sind die Analog/Digital-Wandler 13, 14 nach Fig. 1 oder die Analog/Digital-Wandler 13', 20 nach Fig. 2 oder die Analog/Digital-Wandler 13, 14, 20 nach Fig. 3 in einem Haupt-Analog/Digital-Wandler 22 vereinigt, und zwischen dessen Eingang und die Ausgänge der Vorverstärker 11, 12 bzw. 11', 12' sowie der Differenzstufe 19 bzw. 19' ist ein Multiplexer 23 eingefügt. Dabei ist dieser von einem weiteren, vom Taktgenerator 18 erzeugten Taktsignal geeigneter Frequenz gespeist.

Die Weiterleitung der vom Haupt-Analog/Digital-Wandler 22 erzeugten Digitalsignale erfolgt entweder über den gezeigten Bus 24 - dann ist der Subtrahierer 17" eingangsseitig mit einem Demultiplexer versehen - oder über Einzelleitungen wie in den Fig. 1 bis 3 - dann ist der Haupt-Analog/Digital-Wandler 22 ausgangsseitig mit einem Demultiplexer versehen.

Da nach den Fig. 1 bis 3 die Vorverstärker 11, 12 bzw. 11', 12' mit dem Schaltungsnullpunkt SN verbunden sind, an dem wie erwähnt auch die Masse-Elektrode 4 liegt, werden die jeweiligen Signale an den Meß-Elektroden 2, 3, welche Signale Analogsignale sind, jeweils getrennt voneinander, bezogen auf das Potential des Schaltungsnullpunkts SN, (analog) verstärkt und danach auch getrennt voneinander analog/digital-gewandelt. Erst nach der Analog/Digital-Wandlung erfolgt mittels eines der Subtrahierer 17, 17', 17" die Differenzbildung, nun allerdings im digitalen Teil der Meßverstärker-Anordnung.

Vor der digitalen Differenzbildung ist es auch möglich, die Digitalsignale einer geeigneten Signalverarbeitung zu unterziehen.

Obwohl der Anlaß für die Schaffung der Erfindung wie erwähnt ein nur bei galvanischen Elektroden auftretendes Problem war, kann die Erfindung selbstverständlich auch bei magnetisch-induktiven Durchflußmessern mit kapazitiven Elektroden eingesetzt werden. Die oben erwähnten Vorteile ergeben sich nämlich auch mit kapazitiven Elektroden.

Die Erfindung ist auch nicht auf zwei Meß-Elektroden beschränkt, sondern kann auch bei magnetisch-induktiven Durchflußmessern mit mehr als zwei Meß-Elektroden angewendet werden; dann ist pro Meß-Elektrode jeweils ein weiterer der oben erläuterten Meßkanäle vorzusehen.

Bei der Meßverstärker-Anordnung der Erfindung können die oben erwähnten Schaltungsanordnungen zur Kompensation von elektrochemischen Störspannungen ebenfalls angewendet werden. Dabei sind diese Schaltungsanordnungen so einzusetzen, daß sie auf eines der oben erläuterten analogen Signale einwirken.

Die oben als einer der Vorteile der Erfindung erwähnte gute Trennbarkeit der Störanteile von den Nutzanteilen der Signale der Meß-Elektroden läßt sich z.B. wie folgt erreichen.

Da am Ausgang des Analog/Digital-Wandlers 13 von Fig. 1 ein nur zur Meß-Elektrode 3 gehörendes Einzel-Meß-Elektroden-Signal und am Ausgang des Analog/Digital-Wandlers 14 von Fig. 1 ein nur zur Meß-Elektrode 2 gehörendes Einzel-Meß-Elektroden-Signal sowie am Ausgang des Subtrahierers 17 die Differenz dieser Einzel-Meß-Elektroden-Signale auftreten, kann, z.B. mittels eines Komparators, die Differenz mit einem oder beiden Einzel-Meß-Elektroden-Signalen verglichen werden. Aus diesem Vergleich kann auf die Plausibilität der Einzel-Meß-Elektroden-Signale geschlossen werden.

In vergleichbarer Weise können bei der Anordnung nach Fig. 3 die Signale am Ausgang des Analog/Digital-Wandlers 13 und/oder am Ausgang des Analog/Digital-Wandlers 14 mit dem Signal am Ausgang des Analog/Digital-Wandlers 20 verglichen werden, um die erwähnte Plausibilität zu ermitteln. Am Ausgang des Analog/Digital-Wandlers 20 tritt ein Differenz-Signal auf, das der mittels der Differenzstufe 19' analog gebildeten Differenz der Meß-Elektroden-Signale gleich ist.

Die oben erwähnten Analog/Digital-Wandler können z.B. alle von der in der eingangs referierten US-A 53 51 554 offenbarten Art sein. Die anderen oben erwähnten Teilschaltungen sind in der Elektronik üblich. So können z.B. die Subtrahierer Teil eines Mikroprozessors sein.

## Patentansprüche

1. Meßverstärker-Anordnung (10) eines magnetisch-induktiven Durchflußmessers,
- der ein Meßrohr (1) mit mindestens zwei Meß-Elektroden (3, 2) und mit einer Masse-Elektrode (4) sowie eine Spulenanordnung (5) zur Erzeugung eines Magnetfelds aufweist,
- welche Meßverstärker-Anordnung pro Meß-Elektrode umfaßt:
-- einen eingangsseitig mit der Meß-Elektrode verbundenen Vorverstärker (11, 12) und
-- einen dem Vorverstärker direkt nachgeschalteten Analog/Digital-Wandler (13, 14), und
- welche Meßverstärker-Anordnung ferner umfaßt:
-- einen die Analog/Digital-Wandler mit einem Abtastsignal speisenden Taktgenerator (18),
--- dessen Frequenz größer als ca. 1 kHz ist, und
-- einen den Analog/Digital-Wandlern nachgeschalteten Subtrahierer (17).

2. Meßverstärker-Anordnung (10') eines magnetisch-induktiven Durchflußmessers,
- der ein Meßrohr (1) mit mindestens zwei Meß-Elektroden (3, 2) und mit einer Masse-Elektrode (4) sowie eine Spulenanordnung (5) zur Erzeugung eines Magnetfelds aufweist,
- welche Meßverstärker-Anordnung pro Meß-Elektrode einen eingangsseitig mit der Meß-Elektrode (3, 2) verbundenen Vorverstärker (11', 12') enthält und
- welche Meßverstärker-Anordnung ferner umfaßt:
-- einen einem der Vorverstärker direkt nachgeschalteten ersten Analog/Digital-Wandler (13'),
-- eine den Vorverstärkern nachgeschaltete Differenzstufe (19),
-- einen der Differenzstufe nachgeschalteten zweiten Analog/Digital-Wandler (20),
-- einen den beiden Analog/Digital-Wandlern nachgeschalteten Subtrahierer (17') und
-- mindestens einen die Analog/Digital-Wandler mit einem Abtastsignal speisenden Taktgenerator (18),
--- dessen Frequenz größer als ca. 1 kHz ist.

3. Meßverstärker-Anordnung nach Anspruch 1 mit einer Differenzstufe (19') und einem weiteren, dieser nachgeschalteten, vom Taktgenerator (18) getakteten Analog/Digital-Wandler (20), wobei jeweils ein Eingang der Differenzstufe mit dem Ausgang des jeweiligen Vorverstärkers (11, 12) verbunden ist und der Ausgang des weiteren Analog/Digital-Wandlers an einem weiteren Subtrahend-Eingang des Subtrahieres (17') liegt.

4. Meßverstärker-Anordnung nach Anspruch 1, 2 oder 3, bei der die Analog/Digital-Wandler (13, 14; 13', 20; 13, 14, 20) in einem Haupt-Analog/Digital-Wandler (22) vereinigt sind und zwischen dem Eingang des Haupt-Analog/Digital-Wandlers und den Ausgängen der Vorverstärker ein Multiplexer (23) eingefügt ist.

5. Meßverstärker-Anordnung nach den Ansprüchen 3 und 4, bei der an einem weiteren Eingang des Multiplexers (23) der Ausgang der Differenzstufe (19, 19') liegt.

## Claims

1. An instrumentation amplifier arrangement (10) of an electromagnetic flowmeter
- which comprises a measuring tube (1) with at least two measuring electrodes (3, 2) and a ground electrode (4) as well as a coil arrangement (5) for producing a magnetic field,
- said instrumentation amplifier arrangement comprising per measuring electrode:
-- a preamplifier (11, 12) connected to the measuring electrode at its input end; and
-- an analog-to-digital converter (13, 14) connected directly to an output of the preamplifier;
- said instrumentation amplifier arrangement further comprising:
-- a clock generator (18) supplying the analog-to-digital converters with a sampling signal
--- whose frequency is greater than approximately 1 kHz; and
-- a subtractor (17) following the analog-to-digital converters.

2. An instrumentation amplifier arrangement (10') of an electromagnetic flowmeter
- which comprises a measuring tube (1) with at least two measuring electrodes (3, 2) and a ground electrode (4) as well as a coil arrangement (5) for producing a magnetic field,
- said instrumentation amplifier arrangement comprising:
-- one preamplifier (11', 12') per measuring electrode;
-- a first analog-to-digital converter (13') connected directly to an output of one of the preamplifiers;
-- a differential stage (19) following the preamplifiers;
-- a second analog-to-digital converter (20) following the differential stage;
-- a subtractor (17') following the analog-to-digital converters; and
-- at least one clock generator (18) supplying the analog-to-digital converters with a sampling signal
--- whose frequency is greater than approximately 1 kHz.

3. An instrumentation amplifier arrangement as claimed in claim 1, comprising a differential stage (19') and a further analog-to-digital converter (20) coupled to the output of the differential stage and controlled by the clock generator (18), with a respective one of inputs of the differential stage being connected to the output of the associated preamplifier (11, 12), and the output of the further analog-to-digital converter being coupled to a further subtrahend input of the subtractor (17').

4. An instrumentation amplifier arrangement as claimed in claim 1, 2 or 3 wherein the analog-to-digital converters (13, 14; 13' 20; 13, 14, 20) are united in a main analog-to-digital converter (22), and a multiplexer (23) is inserted between the input of the main analog-to-digital converter and the outputs of the preamplifiers.

5. An instrumentation amplifier arrangement as claimed in claims 3 and 4 wherein a further input of the multiplexer (23) is connected to the output of the differential stage (19, 19').

## Revendications

1. Dispositif (10) d'amplificateur de mesure d'un débitmètre magnéto-inductif
- qui présente un tube de mesure (1) comportant au moins deux électrodes de mesure (3, 2) et une électrode (4) de mise à la masse, ainsi qu'un dispositif de bobinage (5) pour produire un champ magnétique,
- lequel dispositif d'amplificateur de mesure comprend pour chaque électrode de mesure :
-- un préamplificateur (11, 12) connecté, côté entrée, à l'électrode de mesure et
-- un convertisseur analogique/numérique (13, 14) monté directement en aval du préamplificateur, et
- lequel dispositif d'amplificateur de mesure comprend en outre :
-- un générateur d'impulsions (18) alimentant le convertisseur analogique/numérique avec un signal de lecture
--- dont la fréquence est supérieure à 1 kHz environ, et
-- un soustracteur (17) monté en aval des convertisseurs analogiques/numériques.

2. Dispositif d'amplificateur de mesure (10') d'un débitmètre magnéto-inductif
- qui présente un tube de mesure (1) comportant au moins deux électrodes de mesure (3, 2) et une électrode (4) de mise à la masse, ainsi qu'un dispositif de bobinage (5) pour produire un champ magnétique,
- lequel dispositif d'amplificateur de mesure comprend, pour chaque électrode de mesure, un préamplificateur (11', 12') connecté, côté entrée, à l'électrode de mesure (3, 2), et
- lequel dispositif d'amplificateur de mesure comprend en outre :
-- un premier convertisseur analogique/numérique (13') monté directement en aval du préamplificateur,
-- un étage différentiel (19) monté en aval des préamplificateurs,
-- un second convertisseur analogique/numérique (20) monté en aval de l'étage différentiel,
-- un soustracteur (17') monté en aval des deux convertisseurs analogiques/numériques et
-- au moins un générateur d'impulsions (18) alimentant les convertisseurs analogiques/numériques avec un signal de lecture
--- dont la fréquence est supérieure à 1 kHz environ.

3. Dispositif d'amplificateur de mesure selon la revendication 1, comprenant un étage différentiel (19') et un autre convertisseur analogique/numérique (20) synchronisé par le générateur d'impulsions (18) et monté en aval de cet étage différentiel, où une entrée de l'étage différentiel est connectée à chaque fois à la sortie du préamplificateur respectif (11, 12) et où la sortie de l'autre convertisseur analogique/numérique se trouve au niveau d'une autre entrée soustractive du soustracteur (17').

4. Dispositif d'amplificateur de mesure selon les revendications 1, 2 ou 3, dans lequel les convertisseurs analogiques/numériques (13, 14 ; 13', 20 ; 13, 14, 20) sont réunis dans un convertisseur analogique/numérique principal (22) et où un multiplexeur (23) est intercalé entre l'entrée du convertisseur analogique/numérique principal et les sorties des préamplificateurs.

5. Dispositif d'amplificateur de mesure selon les revendications 3 et 4, dans lequel la sortie de l'étage différentiel (19, 19') se trouve au niveau d'une autre entrée du multiplexeur (23).
